# EUROPEAN PATENT APPLICATION

(11) **EP 2 402 816 A1**
(43) Date of publication of application: **04.01.2012**
(21) Application number: 09840722.4
(22) Date of filing: 06.11.2009
(51) Int. Cl.: G03B 5/00, H04N 5/232

(54) **IMAGE PICKUP DEVICE**

(30) Priority: 27.02.2009 JP 2009046542
(71) Applicant: Panasonic Corporation, Kadoma-shi Osaka 571-8501 (JP)
(72) Inventor: MURAKAMI, Toshihiro, Osaka-shi, Osaka 540-6207 (JP)
(74) Representative: Grünecker, Kinkeldey, Stockmair & Schwanhäusser
(86) International application number: PCT/JP2009/005919
(87) International publication number: WO 2010/097868

(57) **Abstract**

Provided is an image pickup device which can prevent a camera-shaken image from being captured unexpectedly and optimally perform auxiliary light photographing and camera-shake prevention. In this device, an image pickup unit (105) picks up an image by using an image pickup element. A still image electronic camera shake correction unit (103) corrects camera-shake by synthesizing a plurality of images picked-up by the image pickup unit (105). A flash photographing control unit (106) sets pre-flash or main flash during photographing. In the case where the flash photographing control unit (106) sets the main flash, when the image pickup unit (105) picks up an image in synchronization with the pre-flash, a photographing control unit (104) brings the still image electronic camera-shake correction unit (103) into an operating state or a non-operating state on the basis of the luminance value of the picked-up image or the shutter gain of the image pickup element of the image pickup unit (105).

## Description

### Technical Field

The present invention particularly relates to an imaging apparatus that performs image stabilization.

### Background Art

Digital cameras in recent years are provided with an image stabilization apparatus to prevent photographing of blurred images due to sensitivity deterioration accompanying the miniaturization of imaging sensors. Furthermore, following schemes of image stabilization apparatuses are known; optical image stabilization that prevents camera shake by swinging an optical system part so as to cancel out camera shake and electronic image stabilization that prevents camera shake by photographing a plurality of images and combining the plurality of photographed images.

With the miniaturizing of optical system parts in compact digital cameras or the like, optical image stabilization is often employed. On the other hand, electronic image stabilization not requiring any complicated optical system is generally employed for cameras mounted on mobile phones which need to be miniaturized.

Furthermore, fill-flash photography is known as a method of preventing blurred images besides the above described schemes. Fill-flash photography can increase the shutter speed by photographing still images simultaneously with the emission of fill light during photographing, and can consequently prevent camera shake.

Furthermore, xenon tube flashlight is often used for compact digital cameras during fill-flash photography.
On the other hand, LEDs requiring no large capacitors are often used for cameras mounted on mobile phones which need to be miniaturized.

On the other hand, for cameras mounted on mobile phones, it is difficult to realize electronic still image stabilization and fill-flash photography using an LED simultaneously. One reason is that a plurality of images need to be combined when realizing electronic still image stabilization and it is difficult to cause the LED to emit light with high luminance for a period of time during which a plurality of images are taken because of a problem with heat capacity when the plurality of images are taken. Furthermore, when the LED is caused to emit light for a long time, the light emission luminance needs to be reduced to suppress heat generation, but reducing the light emission luminance would cause the quantity of light that can be illuminated on an object to decrease, with the result that the shutter speed cannot be increased and the camera shake prevention effect is reduced. For the above described reasons, it is difficult to realize electronic still image stabilization and fill-flash photography using an LED simultaneously.

Furthermore, a conventional method is known which avoids concurrent execution of electronic image stabilization and fill-flash photography using an LED for the above described reasons (e.g. see patent literature 1). Patent literature 1 describes a camera that controls an image stabilization section so as not to allow it to perform image stabilization when an illumination section is set to ON.

### Citation List

### Patent Literature

PTL 1
   Japanese Patent Application Laid-Open No.2008-51946

### Summary of Invention

### Technical Problem

However, patent literature 1 involves a problem that even when a fill light emission setting is ON, if an object is far, the light of the fill light does not reach the object and the shutter speed needs to be decreased to obtain optimal exposure, which results in a blurred image. Thus, when the fill light emission setting is ON, if still image electronic image stabilization is simply turned OFF, there is a problem that blurred images are taken unexpectedly. Furthermore, patent literature 1 also involves another problem that when the object is far, when attempting to execute still image electronic image stabilization, the user needs to turn OFF the fill light emission setting, which complicates the operation.

It is therefore an object of the present invention to provide an imaging apparatus capable of preventing unexpected photographing of blurred images and optimally realizing fill-flash photography and camera shake prevention operation.

### Solution to Problem

An imaging apparatus according to the present invention adopts a configuration, including an imaging section that photographs an image using an imaging element, an image stabilization section that corrects camera shake by combining a plurality of images photographed by the imaging section, a light emission control section that sets pre-light emission or full light emission during the photographing, and a photographing control section that causes, when full light emission is set by the light emission control section, the image stabilization section to operate or not to operate based on a luminance value of the image obtained by the pre-light emission or a shutter gain of the imaging element.

### Advantageous Effects of Invention

According to the present invention, it is possible to prevent unexpected photographing of blurred images and optimally realizing fill-flash photography and camera shake prevention operation.

### Brief Description of Drawings

FIG.1 is a block diagram showing the configuration of an imaging apparatus according to an embodiment of the present invention;
FIG.2 is a flowchart showing operations of the imaging apparatus according to the embodiment of the present invention; and
FIG.3 is a diagram illustrating setting states of full light emission and image stabilization according to the embodiment of the present invention.

### Description of Embodiments

Hereinafter, an embodiment of the present invention will be described in detail with reference to the accompanying drawings.

### (Embodiment)

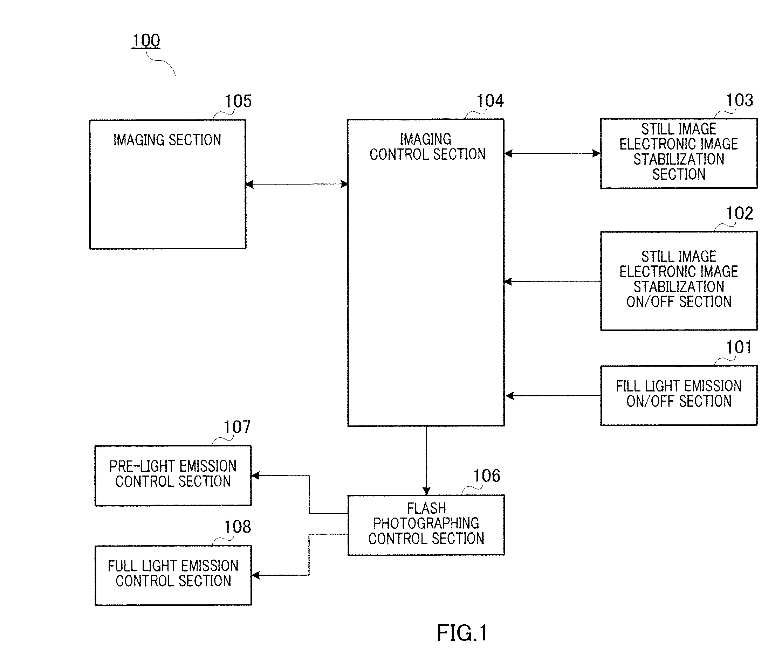

FIG.1 is a block diagram showing the configuration of imaging apparatus 100 according to an embodiment of the present invention. Imaging apparatus 100 is applicable to a communication terminal apparatus such as a mobile phone.

Imaging apparatus 100 is mainly constructed of fill light emission ON/OFF section 101, still image electronic image stabilization ON/OFF section 102, still image electronic image stabilization section 103, photographing control section 104, imaging section 105, flash photographing control section 106, pre-light emission control section 107 and full light emission control section 108. Hereinafter, the components will be described in further detail.

Fill light emission ON/OFF section 101 detects ON/OFF of light emission of fill light and outputs the detection result to photographing control section 104. Fill light emission ON/OFF section 101 may be one of a button and a menu display on a liquid crystal screen.

Still image electronic image stabilization ON/OFF section 102 detects ON/OFF of image stabilization and outputs the detection result to photographing control section 104. Still image electronic image stabilization ON/OFF section 102 may be one of a button and a menu display on a liquid crystal screen.

Still image electronic image stabilization section 103 performs still image electronic image stabilization processing for an image taken by an imaging element of imaging section 105 under the instruction of photographing control section 104.

Upon receiving an ON detection result from still image electronic image stabilization ON/OFF section 102 as input, photographing control section 104 determines whether image stabilization is necessary or not based on a shutter gain of the imaging element of imaging section 105 or a luminance value of the image photographed by the imaging element at the time of pre-light emission. Furthermore, upon determining that image stabilization is necessary, photographing control section 104 instructs still image electronic image stabilization section 103 to execute image stabilization. Upon receiving an ON detection result from fill light emission ON/OFF section 101 as input, photographing control section 104 instructs flash photographing control section 106 to emit fill light at the time of still image photographing.

Imaging section 105 includes an imaging element and photographs an object using the imaging element under the control of photographing control section 104. In this case, imaging section 105 photographs an image in synchronization with pre-light emission or full light emission. Imaging section 105 then outputs the photographed image to imaging control section 104.

Flash photographing control section 106 performs control of setting light emission ON/OFF on pre-light emission control section 107 and full light emission control section 108 under the instruction of photographing control section 104. To be more specific, flash photographing control section 106 sets pre-light emission in pre-light emission control section 107 and then sets full light emission in full light emission control section 108.

Pre-light emission control section 107 performs pre-light emission under the control of flash photographing control section 106.

Full light emission control section 108 performs full light emission under the control of flash photographing control section 106.

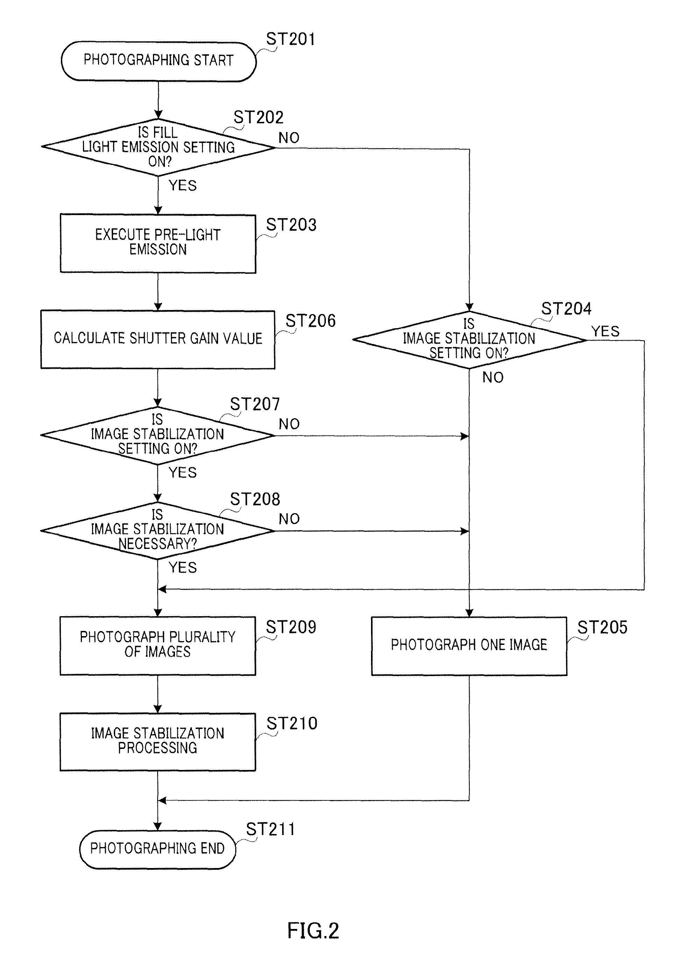

Next, operations of imaging apparatus 100 will be described using FIG.2. FIG.2 is a flowchart showing operations of imaging apparatus 100.

First, imaging apparatus 100 starts photographing (step ST201).

Next, photographing control section 104 determines through fill light emission ON/OFF section 101 whether the fill light emission setting is ON or not (step ST202).

Upon determining that the fill light emission setting is ON (step ST202: YES), photographing control section 104 instructs flash photographing control section 106 to execute pre-light emission and pre-light emission control section 107 executes pre-light emission under the control of flash photographing control section 106 (step ST203).

On the other hand, upon determining that the fill light emission setting is OFF (step ST202: NO), photographing control section 104 determines whether still image electronic image stabilization ON/OFF section 102 detects that the image stabilization setting is ON or not (step ST204).

Upon determining that the image stabilization setting is OFF (step ST204: NO), imaging section 105 photographs only one image (step ST205). After that, imaging section 105 moves the processing forward to step ST211.

Furthermore, upon determining that the image stabilization setting is ON (step ST204: YES), imaging section 105 moves the processing forward to step ST209, which will be described later.

Furthermore, after pre-light emission control section 107 executes pre-light emission in step ST203, photographing control section 104 calculates a luminance value of the image photographed by imaging section 105 or a shutter gain value of the imaging element of imaging section 105 (step ST206).

Next, photographing control section 104 determines whether still image electronic image stabilization ON/OFF section 102 detects that the image stabilization setting is ON or not (step ST207).

Upon determining that the image stabilization setting is OFF (step ST207: NO), imaging section 105 takes one photograph under the instruction of photographing control section 104 (step ST205).

Upon determining that the image stabilization setting is ON (step ST207: YES), photographing control section 104 determines whether image stabilization is necessary or not from the luminance value of the image calculated in step ST206 or the result of pre-light emission of the shutter gain value of the imaging element (step ST208).

Upon determining that image stabilization is unnecessary (step ST208: NO), imaging section 105 takes one photograph under the instruction of photographing control section 104 (step ST205).

Upon determining that image stabilization is necessary (step ST208: YES), imaging section 105 photographs a plurality of images under the instruction of photographing control section 104 (step ST209). When, for example, the luminance value of the image is equal to or below a threshold or when the shutter gain of the imaging element is equal to or below a threshold, photographing control section 104 determines that image stabilization is necessary.

Next, still image electronic image stabilization section 103 executes image stabilization processing (step ST210).

Next, imaging apparatus 100 completes the photographing (step ST211).

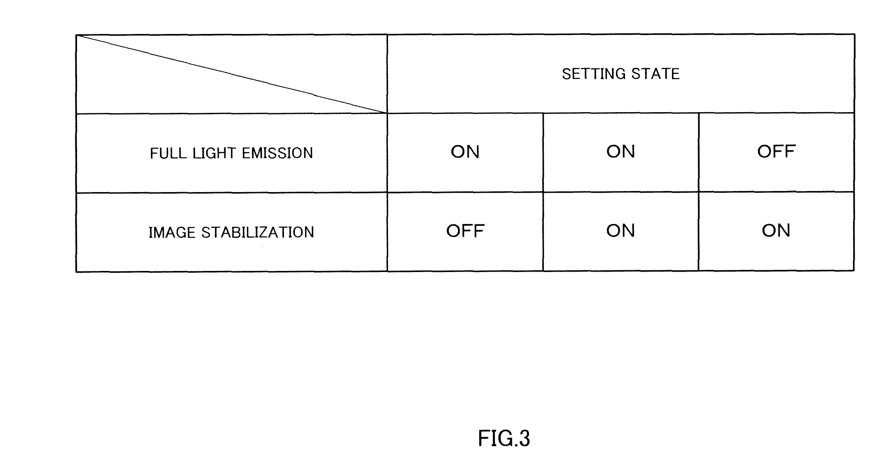

FIG.3 is a diagram illustrating setting states of full light emission and image stabilization.

As shown in FIG.3, when the full light emission setting is ON, the present embodiment has a feature of controlling the switching between cases where the image stabilization setting is turned ON and OFF. That is, when the photographing object of imaging apparatus 100 is a distant object such as a building, even when full light emission is performed at the time of taking a photograph, the light does not reach the object, which makes photography prone to camera shake. In such a case, the present embodiment can turn ON the image stabilization setting, and can thereby prevent unexpected camera shake. On the other hand, when the photographing object of imaging apparatus 100 is a close object such as a person in front of the photographer, the object can be illuminated with light through full light emission at the time of taking a photograph, which makes photography less prone to camera shake. In such a case, the present embodiment turns OFF the image stabilization setting, executes light emission only when one photograph is taken, and can thereby suppress heat generation accompanying light emission.

Thus, according to the present embodiment, it is possible to prevent unexpected photographing of blurred images by controlling ON/OFF switching of the image stabilization setting at the time of full light emission and optimally realize fill-flash photography and camera shake prevention operation.

The disclosure of Japanese Patent Application No. 2009-46542, filed on February 27, 2009, including the specification, drawings and abstract, is incorporated herein by reference in its entirety.

### Industrial Applicability

The imaging apparatus according to the present invention is particularly suitable for use in image stabilization.

## Claims

1. An imaging apparatus comprising:
an imaging section that photographs an image using an imaging element;
an image stabilization section that corrects camera shake by combining a plurality of images photographed by the imaging section;
a light emission control section that sets pre-light emission or full light emission during the photographing; and
a photographing control section that causes, when full light emission is set by the light emission control section, the image stabilization section to operate or not to operate based on a luminance value of the image obtained by the pre-light emission or a shutter gain of the imaging element.

2. The imaging apparatus according to claim 1, wherein the photographing control section causes the image stabilization section to operate when the luminance value is equal to or below a threshold or when the shutter gain is equal to or below a threshold.

3. The imaging apparatus according to claim 1, wherein the photographing control section causes the image stabilization section to operate when the light emission control section does not set full light emission.

4. A communication terminal apparatus comprising the imaging apparatus according to claim 1.

## Amended claims

### Amended claims under Art. 19.1 PCT

**1.** Deleted)

**2.** Deleted)

**3.** Deleted)

**4.** Deleted)

**5.** Added) An imaging apparatus comprising:
an imaging section that photographs an image using an imaging element;
an image stabilization section that corrects camera shake by combining a plurality of images photographed by the imaging section;
a light emission control section that sets pre-light emission or full light emission during the photographing; and
a photographing control section that determines, when full light emission is set by the light emission control section, whether the photographing object is a distant object or a close object based on a luminance value of the image obtained by the pre-light emission or a shutter gain of the imaging element and causes the image stabilization section to operate or not to operate.

**6.** Added) The imaging apparatus according to claim 5, wherein the photographing control section causes the image stabilization section not to operate upon determining that the object is a close object and causes the image stabilization section to operate upon determining that the object is a distant object.

**7.** Added) The imaging apparatus according to claim 5, wherein the photographing control section causes the image stabilization section to operate when the luminance value is equal to or below a threshold or when the shutter gain is equal to or below a threshold.

**8.** Added) The imaging apparatus according to claim 5, wherein the photographing control section causes the image stabilization section to operate when the light emission control section does not set full light emission.

**9.** Added) A communication terminal apparatus comprising the imaging apparatus according to claim 5.
